# EUROPÄISCHE PATENTANMELDUNG

(11) **EP 2 431 155 A1**
(43) Veröffentlichungstag der Anmeldung: **21.03.2012**
(21) Anmeldenummer: 10008751.9
(22) Anmeldetag: 23.08.2010
(51) Int. Cl.: B29C 65/08, B65B 51/22, B65B 51/26, B65B 9/06, B65B 9/20

(54) **Vorrichtung zum Verschweißen einer Schlauchbeutelfolie**

(71) Anmelder: Sonotronic Nagel GmbH, 76307 Karlsbad (DE)
(72) Erfinder: Nagel, Ingo, 76307 Karlsbad (DE); Hecht, Markus, 76307 Karlsbad (DE)
(74) Vertreter: Leitner, Waldemar

(57) **Zusammenfassung**

Die Erfindung betrifft eine Vorrichtung zum Verschweißen einer Schlauchbeutelfolie (F), die eine Schweißstation (4) mit einem Arbeitstisch (6) und einer Sonotrode (10) aufweist, dem von einer Transporteinrichtung (3) in einer Transportrichtung (V) das von der Schlauchbeutelfolie (F) umhüllte Stückgut (S) zuführbar ist, dass der Arbeitstisch (6) eine in Transportrichtung (V) verlaufende Öffnung (5) aufweist, in welcher überlappende Endbereich (F') der Schlauchbeutelfolie (F) zu der Sonotrode (10) führbar sind, und dass eine Andrückrolle vorgesehen ist, die der Sonotrode (10) gegenüberliegend angeordnet ist.
Erfindungsgemäß ist vorgesehen, dass die Sonotrode (10) mit ihrer Längsachse (L) zum Arbeitstisch (6) orthogonal verlaufend angeordnet ist, dass die Sonotrode als eine scheibenförmig ausgebildete, einseitig gelagerte Sonotrode (10) ausgebildet ist, die eine im wesentlichen plane erste Stirnfläche und eine in Umfangsrichtung verlaufende Arbeitsfläche, eine zweite Stirnfläche und einen an diesen anschließende Sonotrodenkörper aufweist, wobei die Sonotrode (10) derart in der Schweißstation (4) angeordnet ist, dass ihre erste Stirnflächen die Arbeitsfläche des Arbeitstisches (6) nicht oder nur unwesentlichen überragt, dass der an die zweite Stirnfläche der Sonotrode (10) anschließende längliche Sonotrodenkörper mittels einer Lagerung (16a,16b) in der Schweißstation (4) gelagert ist, und dass die Achse der der Sonotrode (10) gegenüberliegend angeordneten Andrückrolle im wesentlichen orthogonal zum Arbeitstisch (6) verläuft, so dass die Arbeitsfläche der Sonotrode (10) und die Umfangsfläche der Andrückrolle gegenüberliegend angeordnet sind, wobei zwischen der Sonotrode (10) und der Andrückrolle die sich überlappenden Endbereiche (F') der zur verschweißenden Schlauchbeutelfolie (F) durchführbar sind.

## Beschreibung

Die Erfindung betrifft eine Vorrichtung zum Verschweißen einer Schlauchbeutelfolie, die eine Schweißstation mit einem Arbeitstisch und einer Sonotrode aufweist, dem von einer Transporteinrichtung in einer Transportrichtung das von der Schlauchbeutelfolie umhüllte Stückgut zuführbar ist, dass der Arbeitstisch eine in Transportrichtung verlaufende Öffnung aufweist, in welcher überlappende Endbereich der Schlauchbeutelfolie zu der Sonotrode führbar sind, und dass eine Andrückrolle vorgesehen ist, die der Sonotrode gegenüberliegend angeordnet ist Eine derartige Vorrichtung ist bekannt und wird dazu verwendet, die Längsränder von Schlauchbeutelfolien zu verschweißen, nachdem die zu verpackende Ware von der Schlauchbeutelfolie eingehüllt wurde. Hierzu ist bei der bekannten Vorrichtung vorgesehen, dass die für den Schweißvorgang erforderliche Energie thermisch eingebracht wird, indem die zu verschweißenden Ränder des Schlauchbeutels mit thermischen Schweißwerkzeugen beaufschlagt wird. Ein derartiges thermisches Schweißverfahren ist aber aus einer Reihe von Gründen nachteilig. Insbesondere besteht die Gefahr, dass die thermoplastische Schlauchbeutelfolie beim Verschweißvorgang an den Schweißwerkzeugen haften bleibt, wodurch Schweißnähte von minderer Qualität entstehen: Der Schlauchbeutel wird dadurch oft unbrauchbar.

Aus der DE 91 02 187 ist eine Ultraschall-Schweißvorrichtung bekannt, die zur Verbindung von zumindest teilweise aus thermoplastischem Kunststoff bestehenden Bahnmaterialien dient. Sie weist eine Vorschubeinrichtung auf, welche die im Verbindungsbereich in Übereinanderlage gebrachten Bahnmaterial-Lagen kontinuierlich durch eine Schweißstation führt, in der eine die Bahnmaterial-Lagen beaufschlagende Sonotrode vorgesehen ist. Die Sonotrode weist eine im Durchmesser vergrößerte, im Querschnitt kreisförmige begrenzte Umfangsfläche auf, welche die Sonotroden-Arbeitsfläche ausbildet und in Anlage an die zu verschweißenden Bahnmaterial-Lagen bringbar ist. Die Sonotrode ist so ausgebildet, dass die in Richtung ihrer Längsmittelachse eingeleitete Schallenergie im Bereich ihrer Arbeitsfläche im wesentlichen radial gerichtet ist. Die Sonotrode ist unter einer Arbeitsfläche eines Arbeitstisches der Schweißstation derart gelagert, dass ihre Längsmittelachse orthogonal zu der Vorschubrichtung der Bahnmaterialien und parallel zur Arbeitsfläche des Arbeitstisches verläuft. Die Arbeitsfläche der Sonotrode tritt in eine Aussparung des Arbeitstisches soweit ein, dass ihre höchste Mantellinie etwa bündig mit der Arbeitsoberfläche des Arbeitstisches verläuft, bzw. nur geringfügig über diese Oberfläche vortritt. Über der Arbeitsfläche der Schweißstation ist eine Andrückrolle vorgesehen, wobei die zu verschweißenden Bahnmaterial-Lagen zwischen der rotierenden Arbeitsfläche der Sonotrode und der Andrückrolle hindurchgeführt und von dieser druckbeaufschlagt werden.

Eine derartige Vorrichtung ist nicht dazu geeignet, bereits mit dem Stückgut befüllte Schlauchbeutel zu verschweißen, da bei einer derartigen Konstellation der Schlauchbeutel samt der in ihm aufgenommenen Ware zwischen der Sonotrode und Andrückrolle durchgeführt werden müsste, so dass eine Beaufschlagung der zu verschweißenden Bahnmaterial-Lagen durch die Andrückrolle nicht mehr möglich ist.

Die DE 10 2007 060 442 beschreibt eine Ultraschallsiegelvorrichtung für eine Schlauchbeutelverpackungsmaschine, bei der eine Materialbahn von einer Rolle gezogen zu einem Schlauch geformt und die Längskanten versiegelt werden. Bei der aus dieser Druckschrift bekannten Schlauchbeutelverpackungsmaschine wird erst nach dem Verschweißen der Längsränder der Schlauchbeutelfolie der dadurch entstandene Schlauchbeutel befüllt, in Querrichtung gesiegelt und schließlich abgetrennt, wodurch mit dem Schweißen dieser Quernaht sowohl die Kopfnaht des gefülken, als auch die Bodennaht des nächsten Beutels entsteht. Um nun die sich überlappenden Folienränder der Schlauchbeutelfolie zu verschweißen ist vorgesehen, dass die Siegelfläche der Sonotrode zweiteilig ausgebildet ist und die beiden Siegelflächenteile durch zwei zueinander zugewandte Siegelflächenabschnitte gebildet werden. Die beiden zu verschweißenden Randbereiche der Schlauchbeutelfolie werden also überlappend durch den Spalt der Sonotrode geführt. Eine derartige Ausgestaltung besitzt den Nachteil, dass diese erforderliche Sonotrode nur aufwendig herzustellen ist.

Es ist daher Aufgabe der vorliegenden Erfindung, eine Vorrichtung der eingangs genannten Art derart weiterzubilden, dass ein einfaches Verschweißen einer bereits Stückgut umgebenden Schlauchbeutelfolie zu einem Schlauchbeutel ermöglicht wird.

Diese Aufgabe wird erfindungsgemäß dadurch gelöst, dass die Sonotrode mit ihrer Längsachse zum Arbeitstisch orthogonal verlaufend angeordnet ist, dass die Sonotrode als eine scheibenförmig ausgebildete, einseitig gelagerte Sonotrode ausgebildet ist, die eine im wesentfichen plane erste Stirnfläche und eine in Umfangsrichtung verlaufende Arbeitsfläche, eine zweite Stirnfläche und einen an diesen anschließende Sonotrodenkörper aufweist, wobei die Sonotrode derart in der Schweißstation angeordnet ist, dass ihre erste Stirnflächen die Arbeitsfläche des Arbeitstisches nicht oder nur unwesentlichen überragt, dass der an die zweite Stirnfläche der Sonotrode anschließende längliche Sonotrodenkörper mittels einer Lagerung in der Schweißstation gelagert ist, und dass die Achse der der Sonotrode gegenüberliegend angeordneten Andrückrolle im wesentlichen orthogonal zum Arbeitstisch verläuft, so dass die Arbeitsfläche der Sonotrode und die Umfangsfläche der Andrückrolle gegenüberliegend angeordnet sind, wobei zwischen der Sonotrode und der Andrückrolle die sich überlappenden Endbereiche der zur verschweißenden Schlauchbeutelfolie durchführbar sind.

Durch die erfindungsgemäßen Maßnahmen wird in vorteilhafter Art und Weise eine Vorrichtung zum Verschweißen einer bereits mit einer Ware gefüllten Schlauchbeutelfolie zu einem Schlauchbeutel geschaffen, welches erlaubt, dass auch bei einer derartigen Ausgangskonstellation zum Versiegeln der Endbereiche der Schlauchbeutelfolie Ultraschall verwendet werden kann. Dies besitzt den Vorteil, dass hierdurch die Schweißqualität der die beiden Endbereiche verbindenden Schweißnaht gegenüber den bekannten Vorrichtungen, bei denen die für den Schweißvorgang erforderliche Energie thermisch eingebracht wird, indem die zu verschweißenden Rändern des Schlauchbeutels mit thermischen Schweißwerkzeuge beaufschlagt werden, verbessert ist. Die beschriebene Vorrichtung ist insbesondere bei beschichteten Folien mit einer innen liegenden Beschichtung von Vorteil, da hierdurch die Gefahr einer Überhitzung und somit Zerstörung dieser beschichteten Folien reduziert oder eliminiert wird. Ein weiterer Vorteil der erfindungsgemäßen Vorrichtung besteht darin, dass während des Siegelvorgangs, keine Wärme auf das zu verpackende Produkt abgestrahlt wird. Dies ist insbesondere bei wärmeempfindlicher Ware wie z.B. Schokolade oder Eiscreme von Vorteil.

Die rotierende Andrückrolle sowie die rotierende Sonotrode besitzen den Vorteil, dass hierdurch eine Faltenbildung in der zu verschweißenden Folie während des Schweißvorgangs vermieden wird.

Eine vorteilhafte Weiterbildung der Erfindung sieht vor, dass die Sonotrode mittels zweier Lagerstellen auf einer Halterung gelagert ist, und dass die erste Lagerstelle von der Mittelebene der scheibenförmige Sonotrode einen Abstand aufweist, der im wesentlichen gleich einem Viertel der Wellenlänge der verwendeten Ultraschallschwingung ist, und dass die zweite Lagerstelle von der Mittelebene der Sonotrode einen Abstand aufweist, der im wesentlichen gleich drei Viertel der Wellenlänge der verwendeten Ultraschallschwingung ist.

Eine derartige Maßnahme besitzt den Vorteil, dass hierdurch besonders vibrationsarme Lagerung der Sonotrode in der Vorrichtung ermöglicht ist.

Weitere vorteilhafte Weiterbildungen der Erfindung sind Gegenstand der Unteransprüche.

Weitere Einzelheiten und Vorteile der Erfindung sind dem Ausführungsbeispiel zu entnehmen, das im folgenden der Figuren beschrieben wird. Es zeigen:
- Figur 1:: eine schematische Seitenansicht eines Ausführungsbeispiels der Vorrichtung,
- Figur 2: eine Ansicht aus der Richtung 11 der Figur 1, und
- Figur 3:: eine vergrößerte Darstellung einer Ausführungsform der verwendeten Sonotrode,

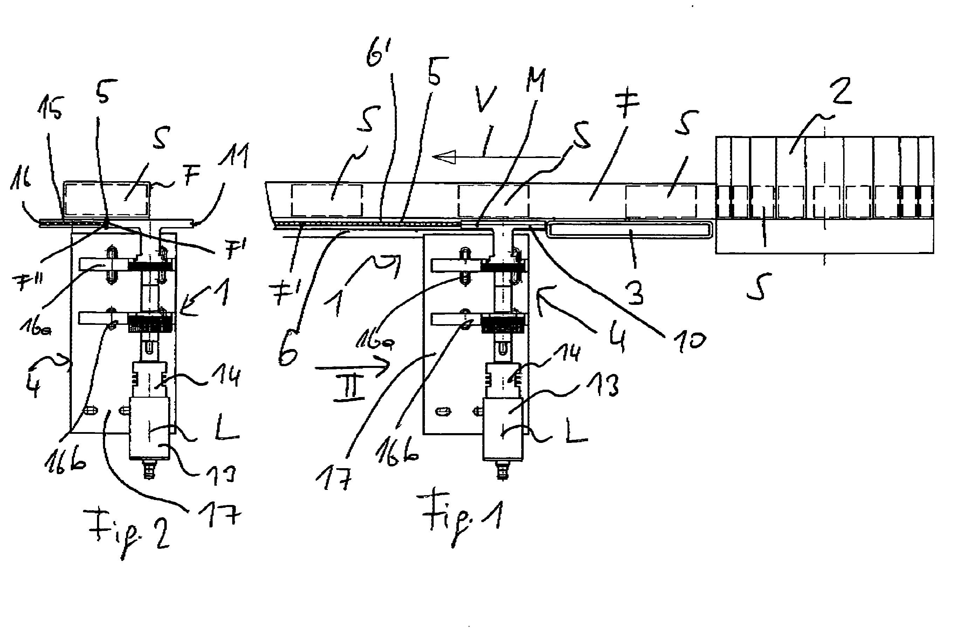

In Figur 1 und 2 ist ein allgemein mit 1 bezeichnetes Ausführungsbeispiel einer Schlauchbeutelverpackungsmaschine dargestellt, die im gezeigten Fall als eine vertikale Schlauchbeutelverpackungsmaschine ausgebildet ist. Dem Fachmann ist aber aus nachfolgenden Überlegungen klar ersichtlich, dass der Ausbildung der Schlauchbeutelverpackungsmaschine als vertikale Schlauchbeutelverpackungsmaschine nicht zwingend ist. Es ist ebenso möglich, die beschriebenen Maßnahmen bei einer vertikal oder bei einer schräg angeordneten Schlauchbeutelverpackungsmaschine einzusetzen.

Die Schlauchbeutelverpackungsmaschine 1 weist eine Speichereinheit 2 auf, in der das zu verpackende Stückgut S gespeichert ist. Dieses wird von an und für sich bekannten und daher nicht gezeigten Mitteln sukzessive zu einer Transporteinrichtung 3 gebracht, welche das Stückgut S in einer Transportrichtung V zu einer Schweißstation 4 bewegt. Während des Transportvorgangs wird ― ebenfalls in bekannter und daher nicht mehr näher beschriebenen Art und Weise ― eine thermoplastische Folie F schlauchförmig um das Stückgut S herumgelegt, so dass die beiden Endbereiche F', F" der Folie F (siehe Figur 2)während der Bewegung in Transportrichtung V zusammengeführt werden und sich zumindest in einer in Transportrichtung V verlaufenden Öffnung 5 eines Arbeitstisches 6 der Schweißstation überlappen.

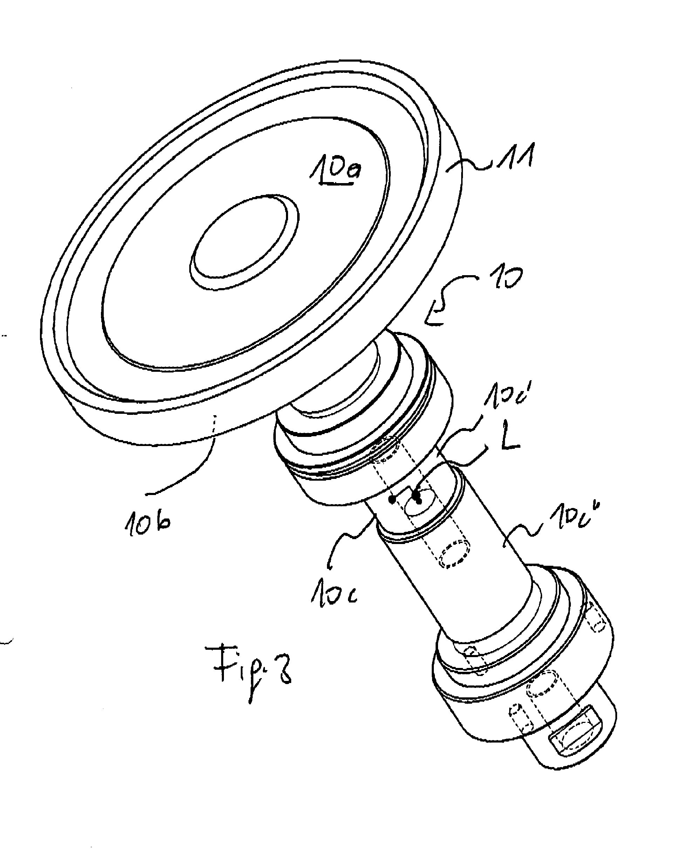

Um nun die Ultraschallverschweißung dieser beiden Endbereiche F', F" der thermoplastischen Folie F mittels Ultraschall durchzuführen, ist bei der beschriebenen Schlauchbeutelverpackungsmaschine 1 vorgesehen, dass die in Figur 3 dargestellte scheibenförmige Sonotrode 10 eingesetzt wird. Diese bildet an ihrer Umfangsfläche eine kreisförmige Arbeitsfläche 11 aus, die - wie nachstehend beschrieben ― in Anlage mit dem ersten Endbereich F' der beiden sich überlappenden und durch die Sonotrode 10 zu verschweißenden Endbereiche F', F" der Folie F bringbar ist. Die scheibenförmige Sonotrode 10 ist so ausgebildet, dass die in Richtung ihrer Längsmittelachse L eingeleitete Schallenergie in Bereich der Arbeftsfläche 11 im wesentlichen radial gerichtet ist. Zur Erzeugung der Schallenergie dient in bekannter Art und Weise ein Ultraschallgenerator 13, der eine hochfrequente elektrische Spannung erzeugt, die von einem Konverter 14 in mechanische Schwingungsenergie umgewandelt wird, die dann über die Sonotrode 10 und die Arbeitsfläche 11 der zu verschweißenden Folie F zugeführt wird.

Die Sonotrode 10 ist dabei als eine einseitig gelagerte Sonotrode ausgebildet, so dass ihre erste Stirnfläche 10a im wesentlichen plan ausgebildet ist. An ihre zweite Stirnfläche 10b schließt sich ein länglicher Sonotrodenkörper 10c an. Der Sonotrodenkörper 10c ist aus Gründen einer einfachen und weniger Material benötigenden Herstellung vorzugsweise zweiteilig ausgebildet und weist einen vorderen Bereich 10c' und einen hinteren Bereich 10c" auf. Jeder dieser Bereiche 10c, 10c" trägt jeweils eine Lagerstelle 16a, 16b, die eine direkte Lagerung der Sonotrode 10 auf einer in den Figuren 1 und 2 nur schematisch dargestellten Halterung 17 erlaubt. Hierbei wird bevorzugt, dass die erste Lagerstelle 16a von der Mittelebene M der scheibenförmigen Sonotrode 10 einen Abstand aufweist, der im wesentlichen gleich einem Viertel der Wellenlänge der verwendeten Ultraschallschwingung ist. Die zweite Lagerstelle 16b ist im wesentlichen um ein 3/4 der Wellenlänge von der Mittelebene M der Sonotrode 10 beabstandet. Hierdurch wird erreicht, dass im Bereich der Lagerstelle 16a, 16b ein Schwingungsminimurn auftritt, so dass die beschriebene Sonotrode 10 sehr vibrationsarm in der Halterung 17 gelagert ist.

Die vorstehend beschriebene Ausbildung der Sonotrode 10 als eine nur einseitig gelagerte Sonotrode besitzt nun den Vorteil, dass eine derartige Sonotrode 10 in einfacher Art und Weise das Verschweißen der Endbereiche F', F" von aus der Folie F gebildeten Schlauchbeuteln, in welche das bereits zu verpackende Stückgut S eingebracht wurde, erlaubt. Wie aus den Figuren 1 und 2 ersichtlich ist, ist die Sonotrode 10 derart in der Vorrichtung 1 montiert, dass ihre Längsachse L orthogonal zum Arbeitstisch 6 verläuft. Die erste Stirnfläche 10a der Sonotrode 10 ragt somit nicht oder nur unwesentlich über die Arbeitsfläche 6' des Arbeitstisches hinaus. Dies hat den Vorteil, dass das zu verpackende Stückgut S im wesentlichen ungestört über die Sonotrode 10 wegbewegt werden kann.

Der Sonotrode 10 gegenüberliegend ist eine Andrückrolle 15 angeordnet, deren Stirnfläche 16 der kreisförmigen Arbeitsfläche 11 der Sonotrode 10 gegenüberliegt. Die beiden sich überlappenden Endbereiche F' und F" werden dann zwischen der Arbeitsfläche 11 der Sonotrode 10 und der Andrückrolle 15 hindurchgeführt und durch eine Ultraschallbeaufschlagung miteinander verschweißt.

Die beschriebene Vorrichtung 1 zeichnet sich dadurch aus, dass mit ihr auch eine bereits Stückgut umgebende Schlauchbeutelfolie F durch die Ultraschallbeauf schlagung der sich überlappenden Endbereiche F', F" zu dem Schlauchbeutel verschweißt werden kann. Dies führt zu einer verbesserten Qualität einer derartigen Versiegelung, als dies mit den bekannten Vorrichtungen, die hierzu eine thermische Beaufschlagung der sich überlappenden Bereiche F' und F" vorsehen, erzielt werden kann. Indem nun die sich überlappenden Endbereiche F', F" während des Schweißvorgangs zwischen der rotierenden Sonotrode 10 und der ebenfalls rotierenden Andrückrolle 15 durchgeführt werden, wird in vorteilhafter Art und Weise eine Faltenbildung bei der Herstellung des Schlauchbeutels vermieden.

## Patentansprüche

1. Vorrichtung zum Verschweißen einer Schlauchbeutetfolie (F), die eine Schweißstation (4) mit einem Arbeitstisch (6) und einer Sonotrode (10) aufweist, dem von einer Transporteinrichtung (3) in einer Transportrichtung (V) das von der Schlauchbeutelfolia (F) umhüllte Stückgut (S) zuführbar ist, dass der Arbeitstisch (6) eine in Transportrichtung (V) verlaufende Öffnung (5) aufweist, in welcher überlappende Endbereich (F', F") der Schlauchbeutelfolie (F) zu der Sonotrode (10) führbar sind, und dass eine Andrückrolle (15) vorgesehen ist, die der Sonotrode (10) gegenüberliegend angeordnet ist, **dadurch gekennzeichnet, dass** die Sonotrode (10) mit ihrer Längsachse (L) zum Arbeitstisch (6) orthogonal verlaufend angeordnet ist, dass die Sonotrode als eine scheibenförmig ausgebildete, einseitig gelagerte Sonotrode (10) ausgebildet ist, die eine im wesentlichen plane erste Stirnfläche (10a) und eine in Umfangsrichtung verlaufende Arbeitsfläche (10b), eine zweite Stirnfläche (10c) und einen an diesen anschließende Sonotrodenkörper (10d) aufweist, wobei die Sonotrode (10) derart in der Schweißstation (4) angeordnet ist, dass ihre erste Stirnflächen (10a) die Arbeitsfläche (6') des Arbeitstisches (6) nicht oder nur unwesentlichen überragt, dass der an die zweite Stirnfläche (10b) der Sonotrode (10) anschließende längliche Sonotrodenkörper (10c) mittels einer Lagerung (16a, 16b) in der Schweißstation (4) gelagert ist, und dass die Achse der der Sonotrode (10) gegenüberliegend angeordneten Andrückrolle (15) im wesentlichen orthogonal zum Arbeitstisch (6) verläuft, so dass die Arbeitsfläche (10b) der Sonotrode (10) und die Umfangsfläche (15') der Andrückrolle (15) gegenüberliegend angeordnet sind, wobei zwischen der Sonotrode (10) und der Andrückrolle (15) die sich überlappenden Endbereiche (F', F") der zur verschweißenden Schlauchbeutelfolie (F) durchführbar sind.

2. Vorrichtung nach Anspruch 1, **dadurch gekennzeichnet, dass** die Sonotrode (1) mittels zweier Lagerstellen (16a, 16b) auf einer Halterung (17) gelagert ist, und dass die erste Lagerstelle (16a) von der Mittelebene (M) der scheibenförmige Sonotrode (10) einen Abstand aufweist, der im wesentlichen gleich einem Viertel der Wellenlänge der verwendeten Ultraschallschwingung ist, und dass die zweite Lagerstelle (116b) von der Mittelebene (M) der Sonotrode (10) einen Abstand aufweist, der im wesentlichen gleich drei Viertel der Wellenlänge der verwendeten Ultraschallschwingung ist.

3. Schlauchbeutelverpackungsmaschine, die eine Transportvorrichtung (3) und eine Schweißstation (4) zur Verschweißung einer Schlauchbeutelfolie (F) aufweist, **dadurch gekennzeichnet, dass** die Schweißstation (4) eine nach einem der Ansprüche 1 oder 2 ausgebildete Vorrichtung (1) aufweist.
